# EUROPEAN PATENT APPLICATION

(11) **EP 2 453 697 A1**
(43) Date of publication of application: **16.05.2012**
(21) Application number: 09848225.0
(22) Date of filing: 25.12.2009
(51) Int. Cl.: H04W 36/00

(54) **METHOD AND SYSTEM FOR PERFORMING A LOCAL SWITCHING OF A LOCAL CALL**

(30) Priority: 12.08.2009 CN 200910167321
(71) Applicant: ZTE Corporation, Shenzhen, Guangdong 518057 (CN)
(72) Inventor: TAO, Quanjun, Shenzhen Guangdong 518057 (CN); XIE, Zhenhua, Shenzhen Guangdong 518057 (CN); LI, Jing, Shenzhen Guangdong 518057 (CN)
(74) Representative: Manitz, Finsterwald & Partner GbR
(86) International application number: PCT/CN2009/076090
(87) International publication number: WO 2011/017895

(57) **Abstract**

The present invention provides a method for implementing local call local switch, which includes that: a source MSC receives a handover request from a source BSS; the source MSC transfers a local reference to a destination BSS; and the destination BSS judges whether local switch can be triggered according to the received local reference, and executes the local switch if a judgment result is that the local switch can be triggered. The present invention further provides a system for implementing local call local switch, which includes a MSC and a BSS, wherein the MSC includes a MSC request module and a MSC processing module, and the BSS includes a BSS request module and a BSS processing module, so as to support for implementing the local call local switch in a handover scenario. The method and the system provided in the present invention implement the local call local switch in handover scenario, and solve the problem of unsuccessful local switch due to BSS connecting multiple MSCs.

## Description

### Technical Field

The invention relates to the communication field, and more specifically, to a method and a system for performing Local Call Local Switch (LCLS) in a circuit switched domain.

### Background of the Related Art

The circuit switch technology adopted by the mobile network such as Global System for Mobile communications (GSM) and Universal Mobile Telecommunications System (UMTS) and so on, called as the Circuit Switched (CS) domain, can provide the basic voice services and the supplementary services based on voice services for users.

Some places in the world such as Africa, South America and South Asia and so on, lack the fast and reliable transmission resources or have the high transmission cost, which brings difficulties in the network and service deployment for operators. However, most of calls in the mobile network are local calls in those places according to data statistics, and these calls are generated in the same Base Station System (BSS). For the local call, if the local switch technology (the voice data are looped in BSS) is adopted, the transmission resources of the A interface between BBS and the Mobile Switch Center (MSC) in the core network.

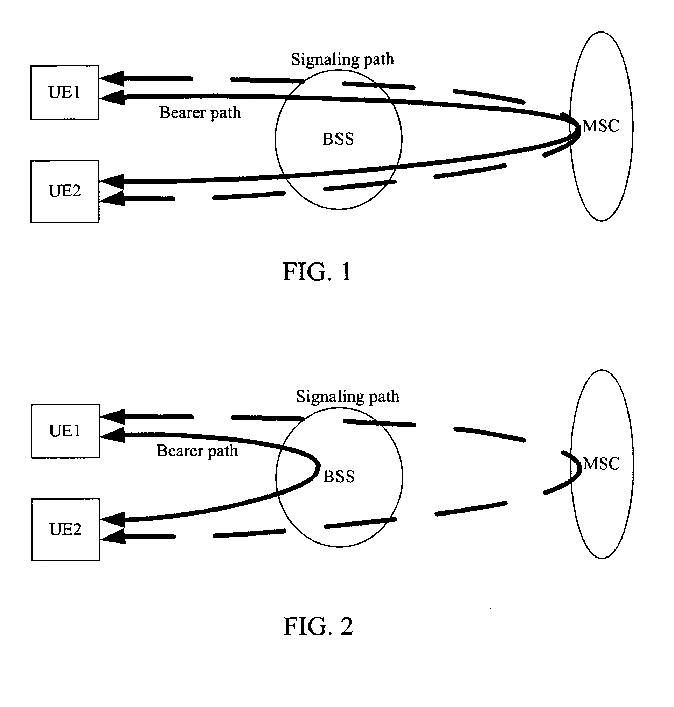

FIG. 1 is a schematic diagram of the traditional voice call, in which the User Equipment (UE) accesses BSS and MSC through the circuit switched domain. When UE1 calls UE2, UE1 sends a call establishment request to the its accessed MSC through BSS; MSC finds the called UE2 according to the location information of the UE2 access, and notifies BSS of establishing the radio bearers connecting UE1 and UE2, and the bearers of UE1 and UE2 are respectively established between BSS and MSC; the bearers at the both sides of MSC are looped to ensure the voice communication between UE1 and UE2.
FIG. 2 is a schematic diagram of the voice call adopting the local call local switch technology. Compared with FIG. 1, when receiving the call establishment request of UE1, MSC judges whether UE1 and UE2 belong to one BSS according to a cell, and if UE1 and UE2 belong to the same one BSS, MSC notifies BSS of performing the local switch; the bearer loops of UE1 and UE2 are performed at the BSS side, which will save the bearer resource, i.e., bearer resource of the A interface between BSS and MSC.

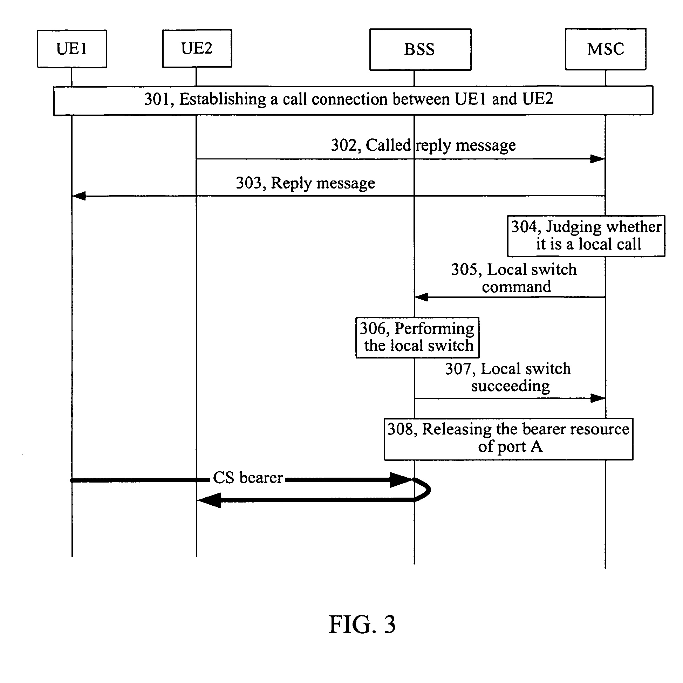

FIG. 3 is a signaling flowchart adopting the local call local switch technology in FIG. 2, comprising the following steps of:
   301, UE1 and UE2 initiate calling in the same BSS, and establish interconnection through the MSC in the core network, and MSC allocates circuit numbers or a call identifiers between BSS and MSC for calling UE1 and called UE2;
   302, the called UE2 replies in the ringing state, and sends a called reply message to MSC through BSS;
   303, MSC sends the called reply message to the calling UE1, and notifies UE1 of the call connecting;
   304, MSC judges whether this call is a local call belonging to one BSS or not according to the current location information of the calling UE1 and the called UE2;
   305, if it is the local call belonging to one BSS, MSC sends the local switch command message including the circuit numbers or the call identifiers between BSS and MSC allocated for calling UE1 and called UE2 in step 301 to BSS to notify BSS to perform the local switch;
   306, BSS receives the local switch command message, associates with two ongoing communication sessions according to the circuit numbers or the call identifiers of the calling and the called in the local switch command message, and loop their voice data bearers to implement to switch the voice bearers within BSS;
   307, BSS sends the local switch success message to MSC after the local switch succeeding;
   308, MSC notifies BSS of releasing the voice bearer connection between BSS and MSC after receiving the local switch success message, and releases the bearer connection of the A interface.

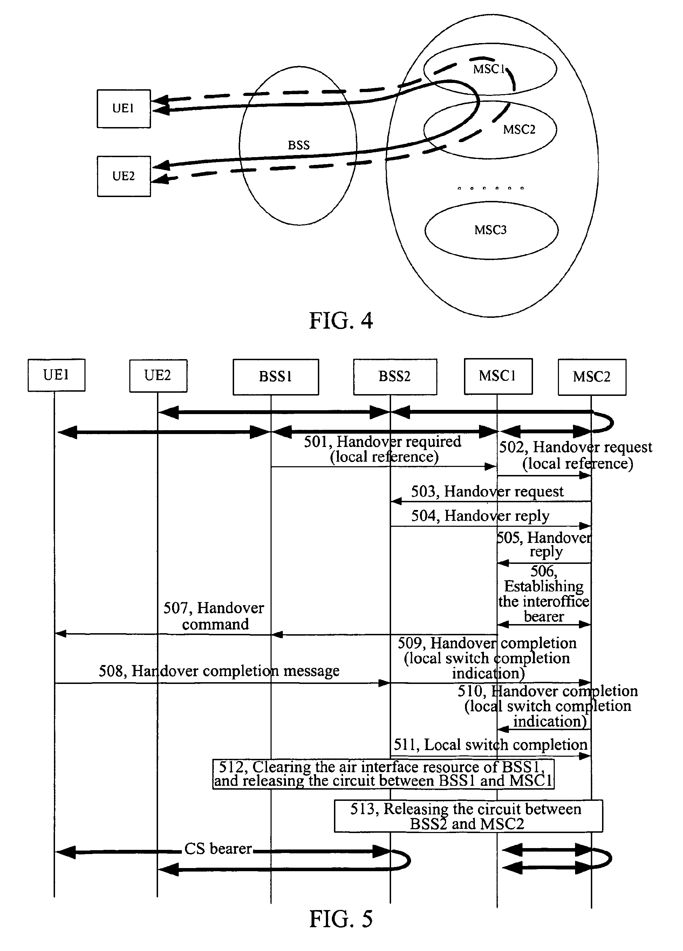

With respect to the analysis in above steps, if the calling UE1 accesses MSC1 through BSS and the called UE2 accesses MSC2 through BSS in a scenario of BBS connecting multiple MSCs as shown in FIG. 4, although the calling and the called initiates calling in the same BSS, the calling and the called respectively access the different MSCs, thereby leading to whichever of MSC1 accessed by the calling UE1 and MSC2 accessed by the called UE2 being unable to judge whether this call is the local call according to location information of the calling and the called, and finally leading to a problem that the local call cannot perform the local switch.

### Summary of the Invention

The object of the present invention is to provide a method and a system for implementing local call local switch, to solve the problem of unsuccessful local switch caused by the BSS connecting multiple MSCs.

The present invention is to provide a method for implementing local call local switch, which comprises:
a source MSC receiving a handover required message from a source BSS;
the source MSC transferring a local reference of an associated call to a destination BSS; and
the destination BSS judging whether local switch can be triggered according to the received local reference, and executing the local switch if a judgment result is that the local switch can be triggered.

Furthermore, in the above method,
the source MSC transfers the local reference to the destination BSS only when a user meets a local switch condition.

Furthermore, in the above method, the user meeting the local switch condition refers that the user does not have a session communicating with other users and a local switch user management strategy of an operator is met.

Furthermore, in the above method, the local reference refers to a local reference allocated by a MSC at a calling side in a process of establishing a call, the allocated local references are different for different calls, and the source MSC obtains and stores the local reference in the process of establishing the call.

Furthermore, in the above method, the step of the source MSC transferring the local reference to the destination BSS comprises:
the source MSC transferring the local reference to a destination MSC; and
the destination MSC sending the local reference to the destination BSS.

Furthermore, in the above method, the step of the destination BSS judging whether the local switch can be triggered according to the received local reference comprises:
the destination BSS finding whether there is a same local reference in a data area of the destination BSS or a corresponding data table according to the local reference after receiving the local reference sent by the destination MSC, and if there is the same local reference, the destination BSS determining that the local switch can be triggered.

Furthermore, in the above method, before the step of the destination BSS judging whether the local switch can be triggered according to the received local reference, the method further comprises:
the destination BSS receiving a handover completion message sent by a user.

Furthermore, in the above method, after the step of the destination BSS executing the local switch, the method further comprises:
the destination BSS transferring an execution result to the source MSC and a destination MSC.

Furthermore, in the above method, the execution result includes a handover completion message, and the handover completion message includes a local switch success indication.

Furthermore, in the above method, after the step of the destination BSS executing the local switch, the method further comprises:
after receiving the execution result, if the local switch succeeds, the source MSC releasing a circuit with the source BSS; and
after receiving the execution result, if the local switch succeeds, the source MSC releasing a circuit with the destination BSS.

The present invention further provides a system for implementing local call local switch, and the system comprises a Mobile Switch Center (MSC) and a Base Station System (BSS), wherein the MSC comprises a MSC request module and a MSC processing module, and the BSS comprises a BSS request module and a BSS processing module, wherein
the MSC request module is configured to:
receive a handover required message sent by a source BSS;
select a destination MSC according to the handover required message; and
transfer a local reference of an associated call to the destination MSC;
the MSC processing module is configured to:
transfer a local reference of an associated call transferred by a source MSC to a destination BSS; and
judge whether a correspondent user of a handover user meets a local switch condition;
the BSS request module is configured to:
send a handover required message to the source MSC;
the BSS processing module is configured to:
receive the local reference of the associated call transferred by the source MSC; and
judge whether local switch can be triggered, and execute the local switch if a judgment result is that the local switch can be triggered, and loop users at both sides to a local voice bearer connection of the BSS.

Furthermore, in the above system, the MSC request module transfers the local reference only when the handover user meets the local switch condition, wherein
the user meeting the local switch condition refers that the user does not have a session communicating with other users and a local switch user management strategy of an operator is met.

Furthermore, in the above system, the local reference refers a local reference allocated by a source MSC in a process of establishing a call, and the allocated local references are different for different calls,
the MSC request module is further configured to: obtain and store the local reference in the process of establishing the call.

Furthermore, in the above system, the BSS processing module is further configured to:
find whether there is a same local reference in a data area of this BSS or a corresponding data table according to the local reference, and
if there is the same local reference, determine that the local switch can be triggered.

Furthermore, in the above system, the BSS processing module is further configured to: receive a handover completion message sent by a user.

Furthermore, in the above system, the BSS processing module is further configured to: transfer an execution result to the source MSC and the destination MSC after completing the local switch; wherein,
the execution result includes a handover completion message including a local switch success indication.

Furthermore, in the above system,
the MSC request module is further configured to: release a circuit with the source BSS after receiving the execution result;
the MSC processing module is configured to: release a circuit with the destination BSS after receiving the execution result.

Compared with the related art, the invention provides a method and a system for performing local call local switch, thereby solving the problem of unsuccessful local switch due to BSS connecting multiple MSCs in the handover scenario.

### Brief Description of Drawings

FIG. 1 is a schematic diagram of the traditional voice call;
FIG. 2 is a schematic diagram of the voice call adopting the local call local switch technology;
FIG. 3 is a signaling flowchart adopted the local call local switch technology in FIG. 2;
FIG. 4 is a schematic diagram of the scenario in which BSS connects multiple MSCs;
FIG. 5 is a flowchart of the embodiment for implementing the local switch in the scenario that the calling user and the called user are located under different BSSs and the different MSCs according to the present invention;
FIG. 6 is a schematic diagram of the system for implementing local call local switch according to the present invention.

### Preferred Embodiments of the Present Invention

Below the present invention will be further illustrated in detail in combination with drawings and embodiments.

FIG. 5 is a flowchart of the embodiment for implementing the local switch in the scenario that the calling user and the called user are located under different BSSs and the different MSCs according to the present invention; the calling UE1 and the called UE2 respectively belong to the different BSSs and the different MSCs in the present embodiment, wherein UE1 accesses MSC1 through BSS1, and UE2 accesses MSC2 through BSS2. In a call process of UE1 and UE2, UE1 hands over to BSS2, and BSS2 triggers the local switch according to the local reference. As shown in FIG. 5, wherein BSS1 is the source BSS, BSS2 is the destination BSS, MSC1 is the source MSC, and MSC2 is the destination MSC. The present embodiment comprises the following steps of:
501, UE1 and UE2 are calling, BSS1 decides to hand over the UE1 session to BSS2 according to radio measurement reports, and BSS1 sends the handover required message to MSC1, and if BSS1 has stored the local reference generated in a the process of establishing the call, the handover required message can include the local reference;
502, MSC1 receives the handover required message sent by BSS1, judges whether the current user UE1 meets the local switch condition, that is, judges whether UE1 currently has a session communicating session with other users, whether a local switch user management strategy of the operator is met, and whether the monitoring point, i.e., the monitoring service of MSC, is configured, and if UE1 simultaneously meets the conditions that there is not the session communicating with other users currently, the local switch user management strategy of the operator is met, and the monitoring point, namely the monitoring service of MSC is configured, or, if UE1 at least meets the conditions that there is not the session communicating with other users currently and the local switch user management strategy of the operator is met, then the local switch condition is met;
if the local switch condition is met, MSC1 selects the destination MSC2 according to the address of the destination cell of the handover in the handover required, and sends the handover request message including the local reference to MSC2;
503, MSC2 sends the handover request message to BSS2 to notify BSS2 to allocate the ground circuit and the air interface resources after receiving the handover request message, and the local reference from MSC1 is forwarded in the handover request message;
504, BSS2 stores the local reference, allocates the air interface and the ground circuit resources, allocates the handover numbers, and returns the handover reply message to MSC2 after completing the allocation;
505, MSC2 returns the handover reply message including the handover numbers allocated by MSC2 to MSC1;
506, MSC1 establishes the interoffice circuit bearer with MSC2 according to the handover number;
507, MSC1 sends the handover command to UE1 through BSS1 to notify UE1 to hand over to BSS2;
508, UE1 sends a handover completion message to BSS2 after completing the handover;
509, BSS2 judges whether the local switch can be triggered for users UE1 and UE2 according to the local reference, wherein the judging method as follows:
   BSS2 perceives that there are two same local references, and finds whether there is a same local reference in a data area of BSS2 or a corresponding data table according to the local reference (i.e., the local reference from MSC1 is forwarded by MSC2 through the handover request message) stored in step 504, and if there is the same local reference, then it is determined that the local switch can be triggered.

If users UE1 and UE2 can trigger the local switch, BSS2 executes the local switch, and UE1 and UE2 are looped to the voice bearer connection of BSS,
BSS2 sends the handover completion message including the local switch success indication to MSC2 after successfully executing the local switch;
510, MSC2 sends the handover completion message including the local switch success indication sent by BSS2 to MSC1;
511, BSS2 sends the local switch completion message to MSC2 at the same time;
512, MSC1 records the local switch success indication after receiving the handover completion message to notify BSS1 to clear the air interface resources and release the ground circuit connecting with BSS1; and
513, MSC2 releases the ground circuit with BSS2.

In other embodiments, the step 511 is an optional step.

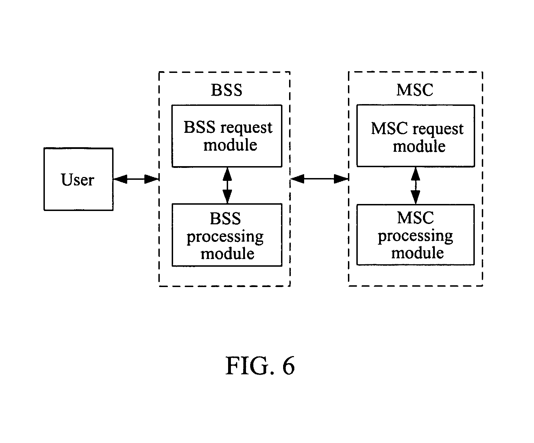

FIG. 6 is a schematic diagram of the system for implementing local call local switch according to the present invention. The system comprises MSC and BSS, wherein MSC has a communication connection with BSS. The MSC comprises an MSC request module and an MSC processing module, and the BSS comprises a BSS request module and a BSS processing module, wherein
the MSC request module is configured to: receive a handover required message sent by a source BSS; select a destination MSC according to the handover required message; and transfer local references of associated calls to the destination MSC;
the MSC processing module is configured to: transfer the local references of associated calls transferred by the source MSC to the destination BSS; and judge whether a correspondent user of the handover user meets a local switch condition;
the BSS request module is configured to: send the handover required message to the source MSC;
the BSS processing module is configured to: receive the local references of associated calls transferred by the source MSC; and judge whether the local switch can be triggered, execute the local switch if the judgment result is that the local switch can be triggered, and loop users at both sides to the voice bearer connection of this BSS;
thereby supporting for implementing the local call local switch in a handover scenario.

Further, the MSC request module transfers the local reference only when the handover user meets the local switch condition, wherein the user meeting the local switch condition refers that the user does not have a session communicating session with other users at present and the local switch user management strategy of the operator is met.

Further, the local reference refers that the local reference allocated by the source MSC in a process of establishing a call, and the allocated local references are different for different calls,
and the MSC request module is further configured to: obtain and store the local reference in the process of establishing the call.

Further, the BSS processing module is further configured to: find whether there are the same local references in a data area of this BSS or a corresponding data table according to the local references; if there is the same local reference, it is determined that the local switch can be triggered.

Further, the BSS processing module is further configured to: receive a handover completion message sent by the user.

Further, the BSS processing module is further configured to: transfer an execution result to the source MSC and the destination MSC after completing the local switch; wherein,
the execution result includes the handover completion message including the local switch success indication.

Further, the MSC request module is further configured to: release the circuit with the source BSS after receiving the execution result;
the MSC processing module is further configured to: release the circuit with the destination BSS after the receiving the execution result.

Of course, the present invention can also have a variety of other embodiments, and a person skilled in the art can make various corresponding changes and transformations according to the present invention without departing from the spirit and essence of the present invention, however, these corresponding changes and transformations should fall into the protection scope of appended claims in the present invention.

### Industrial Applicability

The invention provides a method and a system for implementing local call local switch, which solves the problem of unsuccessful local switch caused by a BSS connecting multiple MSCs

## Claims

1. A method for implementing local call local switch, comprising:
a source Mobile Switch Center (MSC) receiving a handover required message from a source Base Station System (BSS);
the source MSC transferring a local reference of an associated call to a destination BSS; and
the destination BSS judging whether local switch can be triggered according to the received local reference, and executing the local switch if a judgment result is that the local switch can be triggered.

2. The method according to claim 1, wherein
the source MSC transfers the local reference to the destination BSS only when a user meets a local switch condition.

3. The method according to claim 2, wherein the user meeting the local switch condition refers that the user does not have a session communicating with other users and a local switch user management strategy of an operator is met.

4. The method according to claim 1, wherein the local reference refers to a local reference allocated by a MSC at a calling side in a process of establishing a call, the allocated local references are different for different calls, and the source MSC obtains and stores the local reference in the process of establishing the call.

5. The method according to claim 1, wherein the step of the source MSC transferring the local reference to the destination BSS comprises:
the source MSC transferring the local reference to a destination MSC; and
the destination MSC sending the local reference to the destination BSS.

6. The method according to claim 5, wherein the step of the destination BSS judging whether the local switch can be triggered according to the received local reference comprises:
the destination BSS finding whether there is a same local reference in a data area of the destination BSS or a corresponding data table according to the local reference after receiving the local reference sent by the destination MSC, and if there is the same local reference, the destination BSS determining that the local switch can be triggered.

7. The method according to claim 6, before the step of the destination BSS judging whether the local switch can be triggered according to the received local reference, further comprising:
the destination BSS receiving a handover completion message sent by a user.

8. The method according to claim 1, after the step of the destination BSS executing the local switch, further comprising:
the destination BSS transferring an execution result to the source MSC and a destination MSC.

9. The method according to claim 8, wherein
the execution result includes a handover completion message, and the handover completion message includes a local switch success indication.

10. The method according to claim 8, after the step of the destination BSS executing the local switch, further comprising:
after receiving the execution result, if the local switch succeeds, the source MSC releasing a circuit with the source BSS; and
after receiving the execution result, if the local switch succeeds, the source MSC releasing a circuit with the destination BSS.

11. A system for implementing local call local switch, comprising a Mobile Switch Center (MSC) and a Base Station System (BSS), wherein the MSC comprises a MSC request module and a MSC processing module, and the BSS comprises a BSS request module and a BSS processing module, wherein
the MSC request module is configured to:
receive a handover required message sent by a source BSS;
select a destination MSC according to the handover required message; and
transfer a local reference of an associated call to the destination MSC;
the MSC processing module is configured to:
transfer a local reference of an associated call transferred by a source MSC to a destination BSS; and
judge whether a correspondent user of a handover user meets a local switch condition;
the BSS request module is configured to:
send a handover required message to the source MSC;
the BSS processing module is configured to:
receive the local reference of the associated call transferred by the source MSC; and
judge whether local switch can be triggered, and execute the local switch if a judgment result is that the local switch can be triggered, and loop users at both sides to a local voice bearer connection of the BSS.

12. The system according to claim 11, wherein the MSC request module transfers the local reference only when the handover user meets the local switch condition, wherein,
the user meeting the local switch condition refers that the user does not have a session communicating with other users and a local switch user management strategy of an operator is met.

13. The system according to claim 12, wherein the local reference refers a local reference allocated by a source MSC in a process of establishing a call, and the allocated local references are different for different calls,
the MSC request module is further configured to: obtain and store the local reference in the process of establishing the call.

14. The system according to claim 13, wherein the BSS processing module is further configured to:
find whether there is a same local reference in a data area of this BSS or a corresponding data table according to the local reference, and
if there is the same local reference, determine that the local switch can be triggered.

15. The system according to claim 11, wherein the BSS processing module is further configured to: receive a handover completion message sent by a user.

16. The system according to claim 11, wherein the BSS processing module is further configured to: transfer an execution result to the source MSC and the destination MSC after completing the local switch; wherein,
the execution result includes a handover completion message including a local switch success indication.

17. The system according to claim 16, wherein
the MSC request module is further configured to: release a circuit with the source BSS after receiving the execution result;
the MSC processing module is configured to: release a circuit with the destination BSS after receiving the execution result.
